# FASCICULE DE BREVET EUROPEEN

(11) **EP 4 297 179 B1**
(45) Date de publication et mention de la délivrance du brevet: **21.08.2024**
(21) Numéro de dépôt: 23179099.9
(22) Date de dépôt: 14.06.2023
(51) Int. Cl.: H01P 1/22, B64C 1/40

(54) **SUPPORT DE FIXATION D'UN ATTÉNUATEUR DE SIGNAUX**
HALTERUNG ZUR BEFESTIGUNG EINES SIGNALDÄMPFERS
MOUNTING FOR A SIGNAL ATTENUATOR

(30) Priorité: 23.06.2022 FR 2206221
(43) Date de publication de la demande: 27.12.2023
(73) Titulaire: Airbus Operations (S.A.S.), 31060 Toulouse Cedex 9 (FR)
(72) Inventeur: CAREL, Guillaume, 31060 TOULOUSE (FR); HERNANDEZ, Alain, 31060 TOULOUSE (FR)
(74) Mandataire: Airbus-OPS SAS

(56) Documents cités:
- WO-A1-86/04730
- CN-A- 102 820 506
- CN-U- 214 313 470
- FR-A1- 2 376 502
- US-A- 2 429 401

## Description

### Domaine technique

L'invention concerne un support de fixation d'atténuateur de signaux.

### Etat de la technique

Tous les équipements électriques et électroniques, lors de leur fonctionnement, constituent des sources de perturbations électromagnétiques pour les autres appareils situés dans leur voisinage.

Des études ont été réalisées afin de prendre en compte les perturbations électromagnétiques et leurs conséquences. Ainsi, il a été défini la compatibilité électromagnétique ou CEM (en anglais, electromagnetic compatibility ou EMC) qui est l'aptitude d'un appareil ou d'un système électrique ou électronique, à fonctionner de manière optimale dans l'environnement électromagnétique pour lequel l'appareil est conçu, sans produire lui-même des perturbations électromagnétiques qui dégraderaient le fonctionnement des équipements situés dans son environnement. Cet appareil ou système électrique ou électronique doit donc limiter le niveau d'émissions non désirées afin de ne pas perturber le fonctionnement des équipements situés dans son environnement. Il doit, de même, être suffisamment immunisé contre les perturbations provenant d'autres équipements, ou plus généralement de son environnement.

Les signaux générés par ces équipements transitent généralement par des câbles coaxiaux. Lorsque l'amplitude du signal généré par ces équipements est trop importante et induit des perturbations électromagnétiques, il peut être nécessaire d'utiliser un atténuateur coaxial afin de diminuer l'amplitude du signal et ainsi, diminuer le rayonnement électromagnétique émis.

Par exemple, de tels atténuateurs coaxiaux sont classiquement utilisés dans un avion. Ils sont généralement connectés aux câbles coaxiaux de sortie des équipements nécessitant de tels atténuateurs. Ils sont également généralement fixés directement sur ces équipements afin d'assurer leur maintien, quelles que soient les conditions de vol rencontrées par l'avion. Cette fixation est, par exemple, assurée par des rivets vissés dans l'équipement ou tout autre moyen adapté à la géométrie de l'atténuateur et/ou de l'équipement.

Actuellement, les signaux générés par les équipements installés dans un avion présentent de fortes amplitudes, augmentant ainsi l'amplitude des perturbations électromagnétiques associées. Afin de gérer l'amplitude de ces perturbations, la taille des dispositifs atténuateurs coaxiaux a été augmentée en conséquence. Les documents US2429401A,

CN102820506 ou CN206506004 présentent des exemples d'atténuateurs coaxiaux. Ainsi, leur fixation n'est plus aussi aisée qu'auparavant, notamment parce que les équipements sur lesquels les atténuateurs coaxiaux étaient précédemment fixés ne disposent pas de surface suffisante pour permettre leur fixation. Or, il est important de garantir le maintien des atténuateurs durant toute la durée du vol, quelles que soient les conditions du vol (turbulences, vibrations, ...), ceci afin notamment d'éviter une déconnexion intempestive des atténuateurs pouvant entrainer une interruption de la transmission des données.

Un objet de la présente invention est de résoudre tout ou partie des inconvénients de l'art antérieur mentionnés ci-dessus.

### Exposé de l'invention

L'invention concerne un support de fixation d'un atténuateur coaxial, ledit atténuateur étant composé d'un corps principal comportant un connecteur d'entrée et un connecteur de sortie ainsi que d'une plaque d'entrée circonférentielle, d'une plaque de sortie circonférentielle et d'au moins trois plaques intermédiaires circonférentielles réparties entre la plaque d'entrée et la plaque de sortie, toutes les plaques étant agencées sur le corps principal, ledit support de fixation comprenant :
- un bâti comportant une face avant apte à accueillir la plaque d'entrée et une face arrière apte à accueillir la plaque de sortie,
- au moins deux cloisons solidaires du bâti et disposées entre la face avant et la face arrière, les au moins deux cloisons étant aptes à s'insérer entre les au moins trois plaques intermédiaires,
- au moins un premier dispositif de fixation apte à fixer ledit atténuateur coaxial sur ledit support, et
- au moins un deuxième dispositif de fixation apte à fixer ledit support sur une structure rigide.

Ainsi, l'atténuateur coaxial est fermement maintenu grâce aux cloisons s'intercalant entre les au moins trois plaques intermédiaires circonférentielles : les déplacements longitudinaux, latéraux et verticaux de l'atténuateur coaxial ne sont alors plus possible. Les premiers dispositifs de fixation assurent la fixation de l'atténuateur sur le support tandis que les deuxièmes dispositifs de fixation assurent la fixation du support sur une structure rigide qui pourra être un équipement, un cadre, un rail, .... Malgré les vibrations et/ou turbulences rencontrées par l'avion, l'atténuateur reste fermement maintenu sur le support qui est, quant à lui, fermement fixé sur une structure rigide. Ainsi aucune déconnexion intempestive de l'atténuateur ne pourra se produire.

Selon des modes particuliers de réalisation :
- Les au moins deux cloisons latérales sont parallèles aux faces avant et arrière et présentent la forme d'un « U » : cette configuration immobilise l'atténuateur coaxial et évite ses déplacements latéraux, favorisant ainsi son maintien sur le bâti et sur le support.
- Le premier dispositif de fixation comporte au moins un orifice latéral traversant ménagé dans le bâti, cet orifice étant disposé entre une des faces du bâti et une des cloisons latérales et étant conformé pour y insérer des premiers moyens de fixation.
- Les faces d'entrée et de sortie du dispositif présentent une forme complémentaire aux plaques d'entrée et de sortie de l'atténuateur.
- Le deuxième dispositif de fixation comporte au moins deux orifices traversant ménagés dans les faces avant et arrière du bâti et aptes à recevoir des deuxièmes moyens de fixation.
- Le deuxième dispositif de fixation comprend au moins une patte de fixation et une base, la base étant percée d'un orifice apte à recevoir des deuxièmes moyens de fixation.
- Les premiers et deuxièmes moyens de fixations sont des organes de fixations démontables.
- Les premiers moyens de fixation aptes à fixer l'atténuateur au support sont des colliers de serrage.
- Les deuxièmes moyens de fixation aptes à fixer le support sur une structure rigide sont des systèmes vis/écrous.
- Les plaques circonférentielles sont réparties uniformément sur le corps de l'atténuateur.

### Brève description des figures

L'invention sera mieux comprise à la lecture de la description qui va suivre, donnée uniquement à titre d'exemple, et se référant aux dessins annexés sur lesquels :
[Fig.1] représente un atténuateur coaxial classique.
[Fig. 2] représente une vue de trois quart d'un premier mode de réalisation d'un support de fixation selon l'invention.
[Fig. 3] représente une vue de profil d'un premier mode de réalisation d'un support de fixation selon l'invention.
[Fig. 4] représente une vue de face du premier mode de réalisation d'un support de fixation selon l'invention.
[Fig. 5] représente une vue de dessus du support de fixation selon le premier mode de réalisation de l'invention.
[Fig. 6] représente une vue en situation du premier mode de réalisation du support de fixation selon l'invention.
[Fig. 7] représente une vue de trois quart d'un deuxième mode de réalisation du deuxième dispositif de fixation du support de fixation selon l'invention.

### Description détaillée

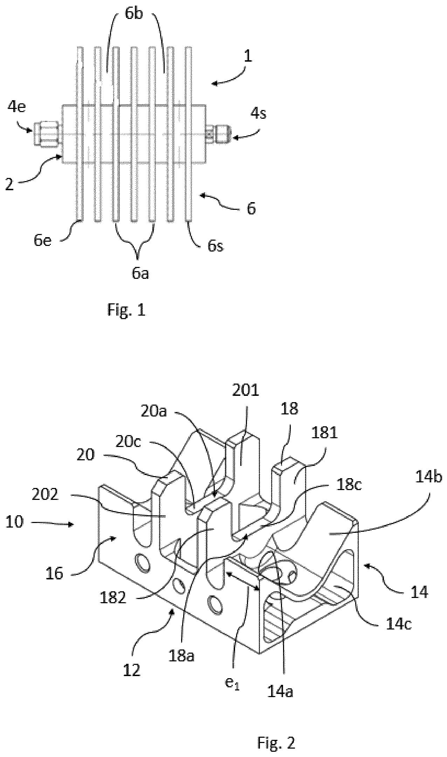

La figure 1 représente un atténuateur 1 coaxial classique. Cet atténuateur se compose d'un corps principal 2 comportant un connecteur d'entrée 4e et un connecteur de sortie 4s. Un dispositif de dissipation thermique 6 est monté sur le corps principal 2 de l'atténuateur 1. Ce dispositif de dissipation thermique 6 est pourvu d'une série de plaques circonférentielles (6e, 6a, 6s) qui facilitent la dissipation de la chaleur générée par l'atténuateur 1 coaxial et ainsi assurent des performances stables. Les plaques (6e, 6a, 6s) peuvent être disposées selon un agencement uniforme le long du corps principal 2. Par convention, la plaque 6e (prénommée plaque d'entrée 6e) est la première plaque circonférentielle disposée à proximité du connecteur d'entrée 4e, la plaque 6s (prénommée plaque de sortie 6s) est la dernière plaque circonférentielle disposée à proximité du connecteur de sortie 4s. Au moins trois plaques circonférentielles 6a (prénommées plaques intermédiaires 6a) sont réparties entre la plaque d'entrée 6e et la plaque de sortie 6s. Les plaques sont espacées les unes des autres d'une distance 6b. Les différentes plaques (6e, 6a, 6s) peuvent être réparties selon un agencement uniforme sur le corps principal 2, comme représenté sur la figure 1. Dans ce cas de figure, les distances 6b séparant les différentes plaques sont identiques. Selon un autre cas de figure, les distances 6b peuvent varier, l'agencement des différentes plaques (6e, 6a, 6s) n'étant alors pas uniforme sur le corps principal 2 de l'atténuateur 1.

Les signaux générés par des équipements électriques et électroniques émettent des rayonnements électromagnétiques qui peuvent perturber le bon fonctionnement des équipements environnants. Ces signaux transitent généralement par des câbles coaxiaux. L'utilisation d'atténuateur coaxial comme celui représenté sur la figure 1 permet de diminuer l'amplitude du signal afin de diminuer le rayonnement électromagnétique du signal.

Dans un avion, de tels atténuateurs 1 coaxiaux sont classiquement utilisés. Leurs connecteurs d'entrée 4e sont généralement connectés en sortie de l'équipement générant le signal à traiter, les connecteurs de sortie 4s étant connectés aux câbles coaxiaux de transmission du signal. Ces atténuateurs doivent être fixés sur une structure rigide (équipement, cadre, rail, ...) pour assurer leur maintien, quelles que soient les conditions de vol rencontrées par l'avion.

Ce maintien est assuré par un support 10 représenté sur la figure 2. Le support 10 comporte un bâti 12 présentant une face avant 14 et une face arrière 16, comme représenté sur la figure 2.

Par convention, le terme « face avant » doit être compris comme la face 14 du support 10 située du côté du connecteur d'entrée 4e de l'atténuateur 1, alors que le terme « face arrière » doit être compris comme la face 16 du support 10 située du côté du connecteur de sortie 4s de l'atténuateur 1.

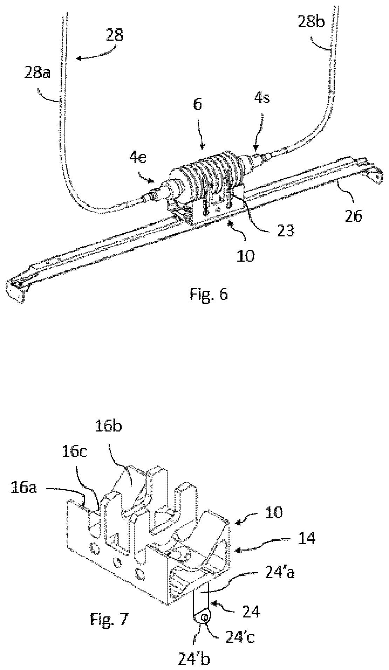

Comme il est visible sur la figure 2, la face 14 (respectivement 16) présente un profil en « V », ce profil comportant deux branches inclinées 14a, 14b (pour des raisons de clarté, les branches inclinées 16a, 16b de la face arrière 16 n'ont pas été représentées et sont visibles sur la figure 7). Ce profil présente la particularité de pouvoir s'adapter facilement à la géométrie de la plaque d'entrée 6e. En effet, pour des raisons de temps de fabrication et de coût, le support 10 doit pouvoir être facilement et rapidement fabricable, il doit de plus pouvoir s'adapter à des atténuateurs dont les caractéristiques géométriques peuvent varier d'un lot à l'autre. Des tolérances de fabrication ne doivent donc pas être un obstacle à son utilisation. Ce profil en « V » présente l'avantage de pouvoir accueillir la plaque d'entrée 6e (respectivement la face de sortie 6s), ladite plaque venant en contact des branches 14a, 14b du profil en « V » en des points pouvant varier selon les disparités de géométrie de ladite plaque 6e (respectivement 6s) ou de la face d'entrée 14 (respectivement la face de sortie 16). Ainsi, les faces avant 14 et arrière 16 présentent une forme complémentaire aux plaques d'entrée 6e et de sortie 6s.

L'épaisseur e1 de la face avant 14 (respectivement la plaque arrière 16) est fonction de la stabilité désirée, c'est-à-dire du nombre de plaques (6e, 6a, 6s) qui seront en appui sur le profil en « V ». On peut également noter que l'épaisseur e1 pourrait être plus allongée que l'épaisseur représentée sur la figure 6 et être ainsi adaptée pour venir à l'aplomb des connecteurs d'entrée 4e et de sortie 4s de l'atténuateur 1, présentant ainsi la fonction de bouclier contre d'éventuels chocs.

La face avant 14 (respectivement la face arrière 16) présente des évidements 14c respectivement 16c) afin d'alléger le poids du support 10, ledit support n'étant pas dimensionné pour reprendre des efforts importants. Cependant, à l'inverse, si le support devait présenter une rigidité importante afin de reprendre des efforts, il pourrait ne pas présenter ces évidements 14c (respectivement 16c).

Les faces avant 14 et arrière 16 peuvent être identiques, ce qui signifie que leurs profils sont identiques. Elles peuvent aussi présenter un profil différent pour s'adapter à la géométrie des plaques d'entrée 6e et de sortie 6s du dissipateur thermique 6 de l'atténuateur 1.

Le bâti 12 comporte de plus au moins deux cloisons 18 et 20 disposées entre la face avant 14 et la face arrière 16 et parallèles à ces faces. Les cloisons 18 et 20 sont agencées pour s'insérer entre deux plaques intermédiaires 6a de l'atténuateur 1.

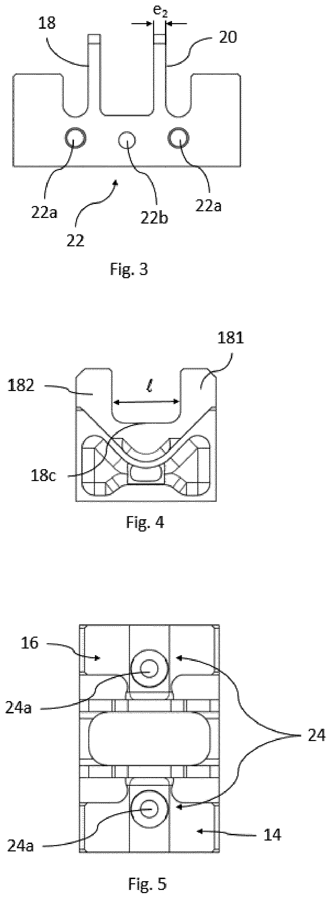

En conséquence, l'épaisseur e2 de chaque cloison 18 et 20 (visible sur la figure 3) est adaptée à la distance 6b existant entre deux plaques intermédiaires 6a : cette épaisseur e2 est strictement inférieure à la distance 6b pour faciliter l'insertion des cloisons 18 et 20 entre les au moins trois plaques intermédiaires 6a du dispositif de dissipation thermique 6.

Chaque cloison 18 et 20 présente la forme d'une encoche 18a et 20a en forme de « U » apte à accueillir le corps principal 2 de l'atténuateur 1. Chaque encoche 18a (respectivement 20a) comporte deux flancs verticaux 181 et 182 (respectivement 201 et 202) reliés entre eux par un flanc horizontal 18c (respectivement 20c).

La forme des encoches 18a et 18b est adaptée à la forme du corps principal 2. Une fois encore, le profil de ces encoches présente la particularité de pouvoir s'adapter facilement à la géométrie du corps principal 2 de l'atténuateur 1. En effet, pour des raisons de temps de fabrication et de coût, le support 10 doit pouvoir être facilement et rapidement fabricable, il doit de plus pouvoir s'adapter à des atténuateurs 1 dont les caractéristiques géométriques peuvent varier d'un lot à l'autre. Des tolérances de fabrication ne doivent donc pas être un obstacle à son utilisation. Ainsi, la largeur l du flanc horizontal 18c (respectivement 20c) doit être strictement supérieure au diamètre du corps principal 2 pour que celui-ci s'insère correctement dans les encoches et soit en contact avec au moins l'un des flancs horizontaux 181 ou 182 (respectivement 201 ou 202) des cloisons 18 et 20. Une fois l'atténuateur posé sur le flanc horizontal 18c (respectivement 20c) du support 10, il est maintenu en place par les flancs verticaux 181 et 182 (respectivement 201, 202) qui limitent les déplacements latéraux de l'atténuateur 1. La hauteur des flancs 181 et 182 (respectivement 201 et 202) est adaptée à la géométrie du corps principal 2.

La largeur l (visible sur la figure 4) du flanc horizontal 18c peut être différente de la largeur l du flanc horizontal 20c afin de s'adapter à une géométrie évolutive du corps principal 2 de l'atténuateur 1.

Les géométries des faces avant 14, arrière 16 et des cloisons 18 et 20 sont adaptées à la géométrie de l'atténuateur 1. Ainsi, on peut se trouver devant différentes configurations :
- Le corps principal 2 est en appui sur le flanc horizontal 18c (respectivement 20c), ou
- La plaque d'entrée 6e (respectivement la plaque de sortie 6s) est en appui sur les branches inclinées 14a et 14b du profil en « V », ou
- Le corps principal 2 est en appui sur le flanc horizontal 18c (respectivement 20c) et La plaque d'entrée 6e (respectivement la plaque de sortie 6s) est en appui sur les branches inclinées 14a et 14b du profil en « V ».

Le support 10 comporte un premier dispositif de fixation 22. Ce dispositif se présente sous la forme d'orifices 22a latéraux, ménagés dans le bâti 12 (figure 3). Ces orifices sont disposés entre la face avant 14 et la cloison 18 (respectivement entre la cloison 20 et la face arrière 16). Ils sont traversants et aptes à recevoir des premiers moyens de fixation 23 (représentés schématiquement sur la figure 6) pour fixer l'atténuateur coaxial 1 sur ledit support 10. Les premiers moyens de fixation 23 peuvent être amovibles afin de pouvoir démonter facilement l'atténuateur 1 en cas de besoin, pour un remplacement ou une opération de maintenance par exemple. Ces premiers moyens de fixation 23 peuvent, par exemple, être des colliers de serrage, comme des Ty-Rap^{®}.

Il est possible de réaliser une fixation plus résistante. Dans ce cas, le bâti 12 peut comporter un orifice 22b supplémentaire disposé entre les deux cloisons 18 et 20 comme représenté sur la figure 3. Cet orifice 22b supplémentaire est apte à recevoir un moyen de fixation amovible (comme un collier de serrage par exemple) pour démonter facilement l'atténuateur 1, le cas échéant. Il peut cependant se substituer aux orifices 22a si la géométrie de l'atténuateur le permet.

Le support 10 comporte un deuxième dispositif de fixation 24 selon un premier mode de réalisation. Ce dispositif se présente sous la forme de deux orifices 24a verticaux ménagés dans les faces avant 14 et arrière 16 du bâti 2 (figure 5). Ces orifices 24a sont disposés de manière à être facilement accessibles. Ils sont traversants et aptes à recevoir des deuxièmes moyens de fixation (non représentés) pour fixer le support 10 sur un élément de structure rigide situé dans l'avion (figure 6). Dans cet exemple de réalisation, la structure rigide correspond à un rail 26. Les deuxièmes moyens de fixation sont amovibles afin de pouvoir démonter facilement le support 10 en cas de besoin, pour un remplacement ou une opération de maintenance par exemple. Ces deuxièmes moyens de fixation peuvent, par exemple, être des vis et des écrous qui sont insérés dans des orifices taraudés ménagés dans la structure à laquelle le support 10 doit être fixé.

La figure 6 représente un support 10 d'atténuateur 1 coaxial fixé sur un rail 26. L'atténuateur 1 coaxial est branché sur un câble coaxial 28 : une première partie 28a du câble est branchée sur le connecteur d'entrée 4e de l'atténuateur 1 tandis qu'une deuxième partie 28b est branchée sur le connecteur de sortie 4s. Les extrémités non dessinées du câble 28 sont connectées aux équipements idoines. L'atténuateur 1 est fixé sur un support 10 par des premiers moyens de fixation 23, des Ty-Rap^{®} par exemple. Le support 10 est lui-même fixé sur un rail 26 par des deuxièmes moyens de fixation (non représentés) comme des vis et des écrous par exemple.

La figure 7 représente une vue de profil d'un deuxième mode de réalisation du deuxième dispositif de fixation 24 du support 10 de fixation. Ce deuxième dispositif de fixation 24 est placé sous la face avant 14 et sous la face arrière 16. Ce deuxième dispositif 24 peut, par exemple, être fixé sous les faces avant 14 et arrière 16 par des moyens de fixation conventionnels tels que des vis et des écrous ou être directement intégrés au bâti 2 lors de sa fabrication. Ce dispositif de fixation 24, selon ce deuxième mode de réalisation, comporte au moins deux moyens de fixation comprenant chacun une patte 24'a et une base 24'b disposée approximativement perpendiculaire à la patte 24'a, chaque base 24'b étant pourvue d'un orifice 24'c. Sur cette figure, le deuxième dispositif 24 placé sous la face arrière 16 a été volontairement omis. Les orifices 24'c sont aptes à recevoir des deuxièmes moyens de fixation (non représentés) adaptés pour fixer le support 10 sur un élément de structure situé dans l'avion. Ces deuxièmes moyens de fixation sont amovibles afin de pouvoir démonter facilement le support 10 en cas de besoin, pour un remplacement ou une opération de maintenance par exemple. Ces deuxièmes moyens de fixation peuvent, par exemple, être des vis et des écrous qui sont insérés dans des orifices taraudés ménagés dans la structure à laquelle le support 10 doit être fixé.

Le choix du dispositif de fixation (premier ou deuxième mode de réalisation) sera fait en fonction de la géométrie de la structure sur laquelle le support 10 doit être fixé.

Un tel support 10 peut être fabriqué selon de multiples procédés de fabrication. Par exemple, l'impression 3D (additive layer manufacturing en anglais) est un procédé particulièrement adapté à la fabrication d'un tel support. En effet, ce support n'étant pas conçu pour reprendre des charges, il peut être fabriqué en matière plastique ou résine selon une fabrication additive. Ce procédé est simple, rapide et peu coûteux ce qui est approprié pour un support tel que celui décrit ici.

En fonction du matériau choisi (plastique, résine, ...), des procédés comme l'extrusion, le moulage (par injection ou extension) ou le thermoformage peuvent également être adaptés à la fabrication du support 10.

De préférence, le support 10 est fabriqué de telle sorte qu'il soit monobloc.

Les avantages d'un tel support 10 sont nombreux :
- Le support 10 assure un maintien fiable de l'atténuateur 1 en limitant les déplacements horizontaux, latéraux et verticaux de l'atténuateur 1, et cela, quelles que soient les conditions de vol,
- Sa conception est simple, il est facilement fabricable,
- Il s'adapte à différentes géométrie et taille des atténuateurs 1,
- Il utilise des moyens de fixation conventionnels déjà utilisés dans le milieu aéronautique et ne nécessitent donc pas de concevoir des moyens de fixation supplémentaires.

## Revendications

1. Support (10) de fixation d'un atténuateur coaxial (1), ledit atténuateur (1) étant composé d'un corps principal (2) comportant un connecteur d'entrée (4e) et un connecteur de sortie (4s) ainsi que d'une plaque d'entrée (6e) circonférentielle, d'une plaque de sortie (6s) circonférentielle et d'au moins trois plaques intermédiaires circonférentielles (6a) réparties entre la plaque d'entrée (6e) et la plaque de sortie (6s), toutes les plaques (6e, 6a, 6s) étant agencées sur le corps principal (2), ledit support (10) de fixation comportant:
- un bâti (12) comportant une face avant (14) apte à accueillir la plaque d'entrée (6e) et une face arrière (16) apte à accueillir la plaque de sortie(6s),
- au moins un premier dispositif de fixation (22) apte à fixer ledit atténuateur coaxial (1) sur ledit support (10), et
- au moins un deuxième dispositif de fixation (24) apte à fixer ledit support (10) sur une structure rigide (26), ledit support (10) de fixation étant **caractérisé en ce qu'**il comporte:
- au moins deux cloisons (18, 20) solidaires du bâti (12) et disposées entre la face avant (14) et la face arrière (16), les au moins deux cloisons (18, 20) étant aptes à s'insérer entre les au moins trois plaques intermédiaires (6a).

2. Support (10) de fixation d'un atténuateur coaxial (1) selon la revendication 1, **caractérisé en ce que** les au moins deux cloisons (18, 20) sont parallèles aux faces avant (14) et arrière (16) et présentent la forme d'un « U ».

3. Support (10) de fixation d'un atténuateur coaxial (1) selon les revendications 1 ou 2, **caractérisé en ce que** le premier dispositif de fixation (22) comporte au moins un orifice (22a, 22b) latéral traversant ménagé dans le bâti (12), cet orifice (22a, 22b) étant disposé entre une des faces (14, 16) du bâti (12) et une des cloisons (18, 20) et étant conformé pour y insérer des premiers moyens de fixation (23).

4. Support (10) de fixation d'un atténuateur coaxial (1) selon les revendications 1, 2 ou 3, **caractérisé en ce que** les faces avant (14) et arrière (16) présentent une forme complémentaire aux plaques d'entrée et de sortie (6e, 6s).

5. Support (10) de fixation d'un atténuateur coaxial (1) selon l'une quelconque des revendications précédentes, **caractérisé en ce que** le deuxième dispositif de fixation (24) comporte au moins deux orifices (24a) traversant, ménagés dans les faces avant (14) et arrière (16) du bâti (12) et aptes à recevoir des deuxièmes moyens de fixation.

6. Support (10) de fixation d'un atténuateur coaxial (1) selon la revendication 4, **caractérisé en ce que** le deuxième dispositif de fixation (24) comprend au moins une patte de fixation (24'a) et une base (24'b), la base (24'b) étant percée d'un orifice (24'c) apte à recevoir des deuxièmes moyens de fixation.

7. Support (10) de fixation d'un atténuateur coaxial (1) selon les revendications 5 ou 6, **caractérisé en ce que** les premiers (23) et deuxièmes moyens de fixations sont des organes de fixations démontables.

8. Support (10) de fixation d'un atténuateur coaxial (1) selon la revendication précédente, **caractérisé en ce que** les premiers moyens de fixation (23) aptes à fixer l'atténuateur (1) au support (10) sont des colliers de serrage.

9. Support (10) de fixation d'un atténuateur coaxial (1) selon la revendication 7, **caractérisé en ce que** les deuxièmes moyens de fixation aptes à fixer le support (10) sur une structure rigide (26) sont des systèmes vis/écrous.

10. Support (10) de fixation d'un atténuateur coaxial (1) selon l'une quelconque des revendications précédentes, **caractérisé en ce que** les plaques circonférentielles (6e, 6a, 6s) sont réparties uniformément sur le corps (2) de l'atténuateur (1).

## Patentansprüche

1. Halterung (10) zur Befestigung eines Koaxialdämpfers (1), wobei der Dämpfer (1) aus einem Hauptkörper (2), der einen Eingangsverbinder (4e) und einen Ausgangsverbinder (4s) aufweist, sowie aus einer Eingangs-Umfangsplatte (6e), einer Ausgangs-Umfangsplatte (6s) und mindestens drei Zwischen-Umfangsplatten (6a), die zwischen der Eingangsplatte (6e) und der Ausgangsplatte (6s) verteilt sind, besteht, wobei alle Platten (6e, 6a, 6s) auf dem Hauptkörper (2) angeordnet sind, wobei die Halterung (10) zur Befestigung umfasst:
- ein Gestell (12), das eine Vorderseite (14), die geeignet ist, die Eingangsplatte (6e) aufzunehmen, und eine Hinterseite (16), die geeignet ist, die Ausgangsplatte (6s) aufzunehmen, umfasst,
- mindestens eine erste Befestigungsvorrichtung (22), die geeignet ist, den Koaxialdämpfer (1) auf der Halterung (10) zu befestigen, und
- mindestens eine zweite Befestigungsvorrichtung (24), die geeignet ist, die Halterung (10) an einer starren Struktur (26) zu befestigen, wobei die Halterung (10) zur Befestigung **dadurch gekennzeichnet ist, dass** sie umfasst:
- mindestens zwei Trennwände (18, 20), die mit dem Gestell (12) fest verbunden sind und zwischen der Vorderseite (14) und der Hinterseite (16) angeordnet sind, wobei die mindestens zwei Trennwände (18, 20) geeignet sind, zwischen die mindestens drei Zwischenplatten (6a) eingesetzt zu werden.

2. Halterung (10) zur Befestigung eines Koaxialdämpfers (1) nach Anspruch 1, **dadurch gekennzeichnet, dass** die mindestens zwei Trennwände (18, 20) parallel zur Vorderseite (14) und zur Hinterseite (16) sind und eine U-Form aufweisen.

3. Halterung (10) zur Befestigung eines Koaxialdämpfers (1) nach den Ansprüchen 1 oder 2, **dadurch gekennzeichnet, dass** die erste Befestigungsvorrichtung (22) mindestens eine im Gestell (12) ausgebildete seitliche Durchgangsöffnung (22a, 22b) umfasst, wobei diese Öffnung (22a, 22b) zwischen einer der Seiten (14, 16) des Gestells (12) und einer der Trennwände (18, 20) angeordnet ist und dafür ausgebildet ist, hier erste Befestigungsmittel (23) einzusetzen.

4. Halterung (10) zur Befestigung eines Koaxialdämpfers (1) nach den Ansprüchen 1, 2 oder 3, **dadurch gekennzeichnet, dass** die Vorderseite (14) und die Hinterseite (16) eine Form aufweisen, die zur Eingangs- und zur Ausgangsplatte (6e, 6s) komplementär ist.

5. Halterung (10) zur Befestigung eines Koaxialdämpfers (1) nach einem der vorhergehenden Ansprüche, **dadurch gekennzeichnet, dass** die zweite Befestigungsvorrichtung (24) mindestens zwei Durchgangsöffnungen (24a) umfasst, die in der Vorderseite (14) und Hinterseite (16) des Gestells (12) ausgebildet sind und geeignet sind, zweite Befestigungsmittel aufzunehmen.

6. Halterung (10) zur Befestigung eines Koaxialdämpfers (1) nach Anspruch 4, **dadurch gekennzeichnet, dass** die zweite Befestigungsvorrichtung (24) mindestens eine Befestigungslasche (24'a) und einen Fuß (24'b) umfasst, wobei der Fuß (24'b) mit einer Öffnung (24'c) versehen ist, die geeignet ist, zweite Befestigungsmittel aufzunehmen.

7. Halterung (10) zur Befestigung eines Koaxialdämpfers (1) nach den Ansprüchen 5 oder 6, **dadurch gekennzeichnet, dass** die ersten (23) und zweiten Befestigungsmittel lösbare Befestigungsorgane sind.

8. Halterung (10) zur Befestigung eines Koaxialdämpfers (1) nach dem vorhergehenden Anspruch, **dadurch gekennzeichnet, dass** die ersten Befestigungsmittel (23), die geeignet sind, den Dämpfer (1) an der Halterung (10) zu befestigen, Klemmschellen sind.

9. Halterung (10) zur Befestigung eines Koaxialdämpfers (1) nach Anspruch 7, **dadurch gekennzeichnet, dass** die zweiten Befestigungsmittel, die geeignet sind, die Halterung (10) an einer starren Struktur (26) zu befestigen, Schrauben-Muttern-Systeme sind.

10. Halterung (10) zur Befestigung eines Koaxialdämpfers (1) nach einem der vorhergehenden Ansprüche, **dadurch gekennzeichnet, dass** die Umfangsplatten (6e, 6a, 6s) gleichmäßig auf dem Körper (2) des Dämpfers (1) verteilt sind.

## Claims

1. Support (10) for fastening a coaxial attenuator (1), said attenuator (1) being composed of a main body (2), comprising an input connector (4e) and an output connector (4s), and of a circumferential input plate (6e), of a circumferential output plate (6s) and of at least three circumferential intermediate plates (6a) distributed between the input plate (6e) and the output plate (6s), all the plates (6e, 6a, 6s) being arranged on the main body (2), said fastening support (10) comprising:
- a supporting structure (12) comprising a front face (14) able to accommodate the input plate (6e) and a rear face (16) able to accommodate the output plate (6s),
- at least one first fastening device (22) able to fasten said coaxial attenuator (1) on said support (10), and
- at least one second fastening device (24) able to fasten said support (10) on a rigid structure (26), said fastening support (10) being **characterized in that** it comprises:
- at least two partitions (18, 20) integral with the supporting structure (12) and arranged between the front face (14) and the rear face (16), the at least two partitions (18, 20) being able to be inserted between the at least three intermediate plates (6a).

2. Support (10) for fastening a coaxial attenuator (1) according to Claim 1, **characterized in that** the at least two partitions (18, 20) are parallel to the front (14) and rear (16) faces and have a "U" shape.

3. Support (10) for fastening a coaxial attenuator (1) according to Claim 1 or 2, **characterized in that** the first fastening device (22) comprises at least one lateral through-orifice (22a, 22b) formed in the supporting structure (12), this orifice (22a, 22b) being arranged between one of the faces (14, 16) of the supporting structure (12) and one of the partitions (18, 20) and being configured so that first fastening means (23) can be inserted therein.

4. Support (10) for fastening a coaxial attenuator (1) according to Claim 1, 2 or 3, **characterized in that** the front (14) and rear (16) faces have a shape which is complementary to the input and output plates (6e, 6s).

5. Support (10) for fastening a coaxial attenuator (1) according to any one of the preceding claims, **characterized in that** the second fastening device (24) comprises at least two through-orifices (24a) formed in the front (14) and rear (16) faces of the supporting structure (12) and able to receive second fastening means.

6. Support (10) for fastening a coaxial attenuator (1) according to Claim 4, **characterized in that** the second fastening device (24) comprises at least one fastening tab (24'a) and a base (24'b), the base (24'b) being traversed by an orifice (24'c) able to receive second fastening means.

7. Support (10) for fastening a coaxial attenuator (1) according to Claim 5 or 6, **characterized in that** the first (23) and second fastening means are removable fastening members.

8. Support (10) for fastening a coaxial attenuator (1) according to the preceding claim, **characterized in that** the first fastening means (23) able to fasten the attenuator (1) to the support (10) are clamping collars.

9. Support (10) for fastening a coaxial attenuator (1) according to Claim 7, **characterized in that** the second fastening means able to fasten the support (10) on a rigid structure (26) are screw/nut systems.

10. Support (10) for fastening a coaxial attenuator (1) according to any one of the preceding claims, **characterized in that** the circumferential plates (6e, 6a, 6s) are distributed uniformly around the body (2) of the attenuator (1).
